# EUROPEAN PATENT SPECIFICATION

(11) **EP 0 767 962 B1**
(45) Date of publication and mention of the grant of the patent: **02.06.1999**
(21) Application number: 95907810.6
(22) Date of filing: 27.01.1995
(51) Int. Cl.: G21B 1/00

(54) **ENERGY GENERATION AND GENERATOR BY MEANS OF ANHARMONIC STIMULATED FUSION**
ENERGIEERZEUGUNG UND ERZEUGER DURCH OBERWELLENFREIE STIMULIERTE FUSION
PRODUCTION D'ENERGIE ET GENERATEUR ASSOCIE EXPLOITANT LA FUSION STIMULEE NON HARMONIQUE

(30) Priority: 27.01.1994 IT SI940001
(43) Date of publication of application: 16.04.1997
(73) Proprietor: UNIVERSITA DEGLI STUDI DI SIENA, 53100 Siena (IT)
(72) Inventor: PIANTELLI, Francesco, I-Siena (IT)
(74) Representative: Bardini, Marco Luigi
(86) International application number: IT9500008
(87) International publication number: WO9520816

(56) References cited:
- WO-A-90/13124
- WO-A-90/13125
- WO-A-90/13128
- WO-A-90/14669
- WO-A-90/14670
- WO-A-93/05516
- DE-A- 3 913 503
- FUSION TECHNOLOGY, MARCH 1991, USA, vol. 19,no. 2, March 1991 ISSN 0272-3921, pages 369-370, FANG P H 'Deuterium fusion through nonequilibrium induction'
- FUSION TECHNOLOGY, vol. 17,no. 1, January 1990 LA GRANGE PARK, ILL., US, pages 206-208, XP 000084739 STEINERT C 'LASER-INDUCED "SEMICOLD" FUSION'
- PATENT ABSTRACTS OF JAPAN vol. 015, no. 047 (P-1162) 05 February 1991 & JP,A,02 281 185 (YASUYUKI SUGANO) 16 November 1990
- HIGH TEMPERATURES - HIGH PRESSURES, 1976, UK, vol. 8,no. 3, 1976 ISSN 0018-1544, pages 247-254, HOCH M ET AL 'Enthalpy of solid and liquid metal halides'
- NUOVO CIMENTO D, JUNE 1989, ITALY, vol. 11D, ser.1,no. 6, ISSN 0392-6737, pages 927-932, VASELLI M ET AL 'Screening effect of impurities in metals: a possible explanation of the process of cold nuclear fusion'
- ACTA CRYSTALLOGRAPHICA, SECTION A (FOUNDATIONS OF CRYSTALLOGRAPHY), 1 MARCH 1992, DENMARK, vol. A48, pt.2, ISSN 0108-7673, pages 80-98, KUHS W F 'Generalized atomic displacements in crystallographic structure analysis'
- JOURNAL OF PHYSICS F (METAL PHYSICS), MAY 1987, UK, vol. 17,no. 5, ISSN 0305-4608, pages 1051-1064, ROY S K ET AL 'Dynamical properties of /sup 57/Fe impurities in different metallic solids from anharmonic recoilless fractions'

## Description

### Field of the invention

The present invention relates to the field of energy production by means of nuclear fusion and, more precisely, it relates to a process for generation of energy by means of anharmonic stimulated fusion of hydrogen isotopes adsorbed on a crystal lattice.

Furthermore, the invention relates to an energy generator which carries out said process.

### Description of the prior art

The problem of procurement of energy has driven industry and research laboratories more and more to study new sources of energy. Among these, a particularly interesting source is the nuclear fusion.

During the studies on nuclear fusion, one applicant has, to that end, realised a "Device for the startup and control of the process of energy production obtained by means of excitation of vibrations of the crystal lattice of a material containing deuterium," described in Italian patent application no. SI/92/A/000002.

The process upon which the functioning of said device is based comprises a step for the preparation of an electrode composed of a metallic material formed either by a single metal or by an alloy of metallic components capable of receiving deuterium, and having a precise crystalline structure, e.g. isometric. Said step of preparation of the electrode comprises first an operation of degassing the electrode in order to clean its crystalline structure. Subsequently, a certain quantity of deuterium (D) is let into the crystal lattice of the electrode at a pre-established temperature and pressure. Then, when the ratio of the number of deuterium atoms to the metallic atoms (D/Me) exceeds the threshold limit of 0.7, a fusion reaction D+D is activated among the deuterium atoms adsorbed in the crystal lattice following the application of a disturbance which sets the consecutive lattice planes into push-pull vibration. Systems for removal of the thermic energy generated by the fusion are provided for.

The device and process illustrated above, however, present considerable difficulties when it comes to actually putting them into practice. First of all, the use of deuterium is expensive in the case of industrial application of the device. Furthermore, the startup step of the reaction is scarcely controllable or repeatable. In fact, in many cases, the amount of energy obtained has been different than that expected on the basis of the energetic values attributable to a D+D reaction and, in any case, has been not constant in identical initial conditions of preparation and startup.

### Summary of the invention

An object of the present invention is, instead, to provide a process for the generation of energy which is able to accomplish a fusion of hydrogen isotopes adsorbed on metal and which can be inexpensively reproduced at an industrial level as well as easily activated and shutdown.

A further object of the present invention is to provide an energy generator which activates the above-mentioned process.

These and other objects are accomplished by the present invention wherein the generation process is characterised by the fact that it comprises:
- a charging step in a metallic core of a quantity of hydrogen isotopes H and D which are adsorbed in the crystal lattice of said core;
mentioned process.

These and other objects are accomplished by the present invention as set forth in the characterizing portions of claim 1.

The threshold temperature which must, necessarily, be surpassed in said heating step is Debye's constant and which, for many of the metals utilizable, is set out in table I. To have a greater probability of success of the reaction, said threshold temperature must be exceeded by at least a ΔT comprised between several degrees and several tens of degrees, according to the type of material in which the active core is formed. Debye's constant can, in any case, be calculated analytically, since it is equal to h/K*ν_{cr}, with h being Planck's constant, K being Boltzmann's constant and ν_{cr} being a typical frequency of each material (for further details, see Charles Kittel, Introduction to Solid State Physics, John Willey & Sons, New York).

The type of hydrogen to be adsorbed in said core is preferably natural hydrogen or, in other words, having a ratio between isotopes D and H of about 1/6000. It is however possible to obtain the reaction also with natural hydrogen depleted of or enriched with deuterium, with a ratio of isotopes D to H in any case higher than 1/80000 and preferably comprised between 1/10000 and 1/1000.

The novel features of the generator are set forth in the characterizing portion of claim 25.

### Brief description of the drawings

Further characteristics and advantages of the process and the generator according to the present invention will become apparent in the description which follows of some of its possible embodiments, given as examples and not limitative, with reference to the attached drawings in which:
- figure 1 shows a longitudinal sectional view of a first embodiment of the generator according to the invention;
- figure 2 is a longitudinal sectional view of a second embodiment of the generator according to the present invention;
- table I sets out the Debye's constant for several metals and alloys.

### Description of the preferred embodiments

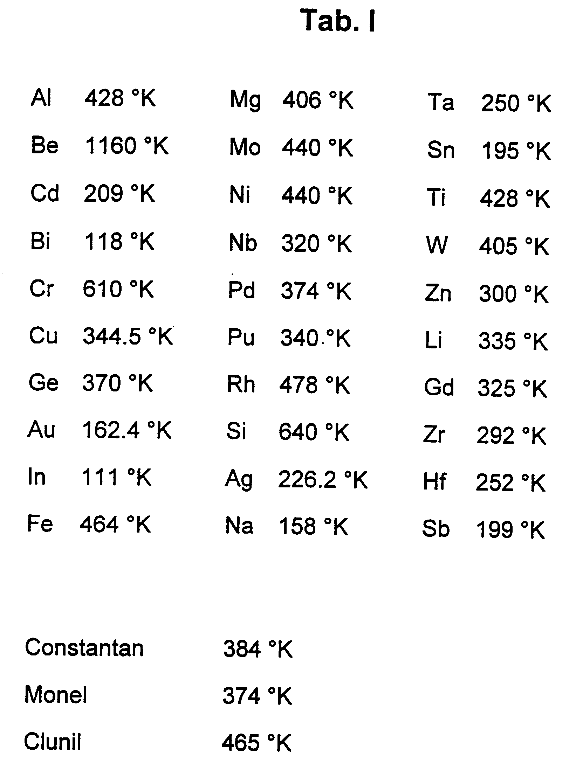

With reference to figure 1, a generator for actuating the process according to the invention comprises a generation chamber 2 crossed by a tube bundle 5 in copper which extends between two flanges 10 welded to a support shell 11 which externally defines chamber 2. Tubes 5 cross flanges 10 and communicate with a prechamber 3 comprising an annular jacket 3a delimited by a cylindrical shell 13 with inlets 3b. Furthermore, tubes 5 communicate with a collection dome 4 communicating through flanged nozzles 14 with means for heat exchange and a circulation pump which are not shown.

Chamber 2 communicates, through axial ducts 6 which cross dome 4 on one side and prechamber 3 on the other side, with a gas tank and an air pump not shown by means of connections of a known type placed externally of sell 13. Ducts 6 are suited to feed hydrogen or other cases into chamber 2.

On tubes 5, a metallic active core 1 of a thickness of several millimetres is electroplated. Around support shell 11, an electric coil 9, for example immersed in a ceramic matrix 9a, is wrapped.

The fluid, coming from inlets 3b and crossing tube bundle 5, is preheated in the jacket 3a, and removes the heat generated in core 1 during an anharmonic fusion reaction of the isotopes of hydrogen, the startup of which will be described further on.

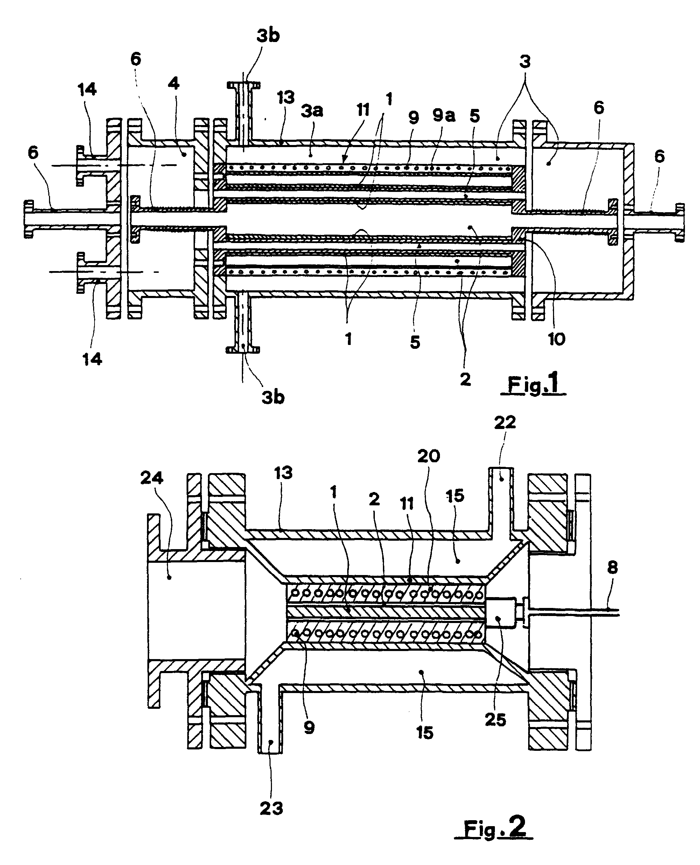

With reference to figure 2, another embodiment of the generator according to the invention comprises an active core 1 having the form of a cylindrical bar inserted in chamber 2 contained in a heating cylinder 20 in which an electric winding 9 is immersed.

A jacket 15 formed by a support shell 11 and a cylindrical shell 13 allows for the passage of a thermal carrier fluid which enters through an inlet 22 and exits from an outlet 23 after having axially lapped shell 11. The gas present in chamber 2 is controlled through chamber 24 communicating with a gas tank and with an air pump not shown by means of connections of a known type. Core 1 is in contact with an electrode 25 suited to transmit to it an impulse of a piezoelectric type to activate the anharmonic fusion reaction of the hydrogen isotopes as will now be described.

In both the generators of figures 1 and 2, windings 9 have a multiple function since, besides generating a magnetic field necessary for the adsorption of the hydrogen by the core, they also have the function of heating the chamber of the thermal carrier fluid as well as the function of startup of the reaction, for example by means of an electrical impulse with a magnetostrictive effect.

Core 1, in the first case shown (fig. 1), is a metal layer, for example a multiple layer of Nickel and Chromium alternated, while in the second case (fig. 2), it is a cylindrical metallic bar, for example of Nickel-Chromium steel. Core 1 preferably has a homogeneous surface without, in so far as possible, any nicks or defects. In the crystal lattice of core 1, by means of known techniques, natural hydrogen, having a ratio of D isotopes to H isotopes of about 1/6000, is made to adsorb. The percentage of deuterium D with respect to the hydrogen H can also be greater than that indicated even though, with D/H ratio greater than 1/1000, there may not be an economic advantage in the exploitation of the reaction, due to the current costs of deuterium, as well as the difficulty of interrupting the reaction with a normal shutdown operation as will be described further on.

### 1) Charging step

Among the known techniques for charging hydrogen in the active core so that the hydrogen isotopes become chemically adsorbed in the crystal lattice, there are the following:
- electrolytic adsorption
- immersion of the core in a gaseous environment containing hydrogen at a pre-established temperature and pressure;
- immersion of the core in solutions of HCl, HNO₃, H₂SO₄;
- immersion of the core in galvanic baths containing, for example, NH₃ when the metal constituting the core is deposited on a support composed of a material such as Cu or ceramic.

Some materials require the application of a magnetic field having an intensity greater than the saturation field, generally greater than 0.1 Tesla. In the two cases of the generators described above, the magnetic field is produced by winding 9.

The absolute pressure of the hydrogen inside the generation chamber must be maintained at values preferably comprised between 1 and 1000 millibar and, in any case, lower than 4 bar, beyond which adsorption no longer takes place unless at extremely high pressures (>50 bar).

The chemical adsorption of the hydrogen isotopes in the metal of the core causes the disassociation of the H₂ and D₂ molecules and the creation inside the crystalline structure of the core of covalent bonds (hydrides) between the H and D atoms with the metal. The electrostatic repulsion among the hydrogen atoms is screened by the excess of negative charge created by the free electrons of the metal. Therefore, the decrease of the electrostatic repulsion due to these bonds allows for the bonded atoms to approach one another more closely than is normally possible with free atoms in identical conditions.

When the crowding of the H and D isotopes adsorbed on the metal in the proportion stated above is sufficiently high, for example with a numeric ratio of hydrogen isotopes to metal atoms greater than 0.3, a strong reticular vibration, however created, can make the two systems Me+H and D+Me approach one another, so that atoms H and D come to be at a distance less than that in which the nuclear force enters into play.

### 2) Heating step

According to the invention, only when the temperature of the active core 1 is raised to a value higher than Debye's constant of the material composing the core, of which the values of many metals are listed in table 1, is it possible to successfully carry out the startup of the fusion reaction. In fact, only above said temperature do the number of anharmonic oscillations of the crystal lattice, in which the hydrogen is adsorbed, become greater than the number of oscillations of harmonic type with following increase of the probability that the vibrational wave vectors add up one another. It is, however, necessary that, in order to successfully activate the reaction, Debye's constant be exceeded by several degrees to several tens of degrees according to the metal used for the core, so as to allow the "population" of anharmonic oscillations to sufficiently exceed that of the harmonic oscillations.

The heating step can be carried out by means of any known system, for example thermoelectric heating, oxidation of combustibles or other exoenergetic chemical reactions, recombination of ions into polyatomic molecules, laser impulses and immersion in hot fluids.

### 3) Startup step

At the points of the core on which the hydrogen has been adsorbed or, in other words, in proximity to the external surface of the core, a push-pull oscillation of the lattice can successfully cause two hydrogen isotopes, respectively hydrogen H and deuterium D, to approach one another more closely than the critical distance at which, as described above, the nuclear forces enter into play.

According to the invention, it is possible, in the conditions described above and only in those conditions, to activate the localised nuclear reaction described above, producing a stress in the active core capable of producing the coherent addition of a great number of wave vectors thus obtaining a local gigantic vibrational impulse capable of sufficiently exciting the crystal lattice where the hydrogen isotopes are adsorbed. Local volume variations due to expansion of the active core surface have been measured which are 20 times greater than those measured in the non active portion of the core.

Each H+D fusion produces ³He, freeing 5,5 MeV, which is sufficient energy to completely vaporise the area surrounding the point in which the reaction has occurred. In this case, the complete H+D reaction would be H+D = ³He + γ of 5,5 MeV. However, in this case, no γ photons or other particles are freed from the core, since the duration of covalent hydrogen-metal bonds is on the order of 10⁻¹⁵ - 10⁻¹⁶ seconds, whereas the nuclear interaction time is on the order of 10⁻¹⁸ - 10⁻²¹ seconds. Therefore, the energy freed from the fusion can dissipate through the lattice without emission of particles or γ photons. (See Max Born, Atomic Physics, ed. Blacky and Son, Glasgow; A.F.Davydov, Teoria del nucleo atomico, ed Zanichelli, Bologna; G.K. Werthaim, Mössbauer Effect)

In more detail, after having exceeded the Debye's constant, the probability that the H+D reaction is activated is greater when the anharmonic terms of the interatomic displacement become important, and this can happen only when the temperature is sufficiently higher than Debye's constant, at a characteristic temperature for each material. Under these conditions, following the production of a sufficiently strong stimulus by means of an external action, the quanta of vibrational energy crossing the crystal lattice, instead of oscillating in a disorganised manner, coherently interact with following addition of the wave vectors tangentially to the surface of the active core and with consequent creation of amplified energy peaks in particular points (loci). The wave trains which move on the active material of the core, besides creating localised fusions, form a coherent multimodal system of stationary oscillations inside portions of the active material of the core, thus causing a negative change of entropy and consequent discharge of heat, which can be exploited by the generator according to the invention.

Subsequently, the stationary wave continues to maintain itself by means of the pump effect produced by the H+D reactions. In fact, because the configuration of the lattice is altered by the localised vaporisations caused by the individual H+D fusions displaced in said loci, the wave vectors add up again in other loci, close to the previous ones but where the lattice is still intact, and activate further H+D reactions. With repetition of the fusions, the core comes to have a surface with a plurality of substantially equidistant cavities separated by tracts of still intact lattice, and the mass of the active core becomes progressively smaller as a result of the successive localised vaporisations.

A further, significant contribution to the maintenance of the stationary wave is provided by the interaction of the electrons with the lattice, especially in the presence of a variable electromagnetic field. In fact, every transition from one Fermi's state to another involves the emission of a particle of a given frequency and wave vector. (See Charles Kittel, Introduction to Solid State Physics, John Willey & Sons, New York)

The startup step can be carried out by means of various known types of impulses, as long as the rise time is less than 10⁻¹ seconds.

In cases in which the active core is composed of pure metals or their compounds with other elements or substances, steels, stainless steels, alloys or metallic systems of single or multiple layer, the startup step can be carried out according to one of the following methods.
- Thermic stress method obtained through pressure gradients: polyatomic gas such as H₂, D₂, HD, HT, C₂H₄, NH₃, N₂, O₂, etc., is inserted in the generation chamber with negative enthalpic difference of physical adsorption (ΔH) and a corresponding pressure gradient comprised between 1 millibar and 4 bar. As already known, the gas introduced generates thermic stress on the surface of the active core, due to a transitory dissociation of the gas molecules and further sudden exoenergetic reaction forming again the molecules and catalysed by the surface of the core itself. Such thermic stress causes the formation of wave trains of reaction and quick startup of the process of energy production through nuclear fusion between H and D, as described above. The embodiment of figure 1 is designed for exactly this type of startup in which the polyatomic gas is introduced through ducts 6 shown in figure 1. During the reaction, by means of the passage of current through winding 9 placed along the entire length of the core 1, a constant magnetic field comprised between 0.2 and 1.5 Tesla is maintained.
- Method with mechanic impulse: a mechanical impulse of torsion, traction or compression is applied to the ends of the active core with an intensity and rise time, for example 10⁻¹ seconds, sufficient to provoke a structural deformation which then activates the fusion process.
- Method with electric striction: an electrical current impulse is applied to the ends of the active core with suitable peak values and rise time, for example 1000 Ampere for 30 nanoseconds, to provoke a structural deformation which then activates the fusion process. The embodiment of figure 2 is designed also for this type of startup, wherein the alternate voltage impulse is produced by an electrode 25 connected to active core 1 and fed by means of cables 8.
- Optoelectronic method: A high power laser beam impulse for example 1MW, is directed on the core and provokes a shock wave and temperature stress which, in turn, cause a sudden structural deformation which then activates the fusion process.
- Radio-frequency method: An impulse of radio-frequency is applied to the active core having a frequency which corresponds either to the resonance frequency of the spins of the hydrogen isotopes or to the plasma frequency of the free electrons of the crystal lattice.
- Ultrasonic vibration method: The active core is contained in a resonant cavity. An energy impulse of ultrasonic vibrations is applied to the active core, having an intensity and duration (for example 10⁻¹ seconds) sufficient to provoke the reaction of fusion.

In cases in which the material forming the active core is a type, such as a crystal, which is subject to the piezoelectric effect, the startup step can be activated by means of a method with inverse piezoelectric effect, sending to the ends of the metallic core alternate voltage impulses with a frequency equal to that of the mechanic resonance of the core with peak values (for example greater than 5kV) sufficient to provoke a structural deformation which then activates the process of fusion. The embodiment of figure 2 is also designed for this type of startup, in which the alternate voltage impulse is produced by electrode 25 connected to active core 1 and fed through cables 8.

If, finally, the material forming the active core is of a ferromagnetic type, the startup step can be activated by means of a magnetostrictive method which consists in the production, along the metallic core, of a magnetic field with peak values higher than the intensity of magnetic saturation and a rise time lower than 10⁻¹ seconds. This type of startup can be carried out both with the generator of figure 1 and that of figure 2 by applying an electromagnetic impulse through winding 9.

### 4) Heat exchange step

Subsequent to the startup, the reaction is maintained in stationary conditions by exchanging heat by means of a thermal carrier fluid made to circulate in the tube bundle 5 crossing the generation chamber of figure 1 or through jacket 15 of figure 2. The removal of heat must not exceed a level where it makes the temperature of the active core fall below Debye's constant, in which case a slow shutdown of the reaction would occur.

With regard to the thermal power which can be obtained, the dimensions and form of the active core play an important role. The active core can have time form of a rod, a lamina, separate and/or tangled wires, free or pressed powder, with or without binder. For example, in generation chamber 2 of figure 1, the active core can be composed, rather than of metal deposited on tubes 5, of a plurality of bars placed in various points of the chamber itself. Alternatively, chamber 2 can be filled with metallic powder.

Clearly, the temperature of core 1 which houses the reaction must remain well under the temperature of transition, above which the lattice looses its crystalline properties and passes to an amorphous state comparable to the vitreous state, and this happens at temperatures which are lower than the melting temperature of each metal. In said conditions, in fact, the core would have a response to the oscillations completely different from the behaviour which occurs when the state is crystalline, because the preferential direction on which the wave vectors add up would disappear, with absolutely no possibility of having the above-described reaction.

It is also necessary that the steady functioning temperature to which the core is brought does not approach particular critical temperatures, which are well known for every metal and identifiable from experimentally obtained adsorption diagrams, at which the phenomenon of progressive expulsion of hydrogen from the lattice occurs.

### 5) Shutdown step

The reaction can be interrupted by arresting the coherent multimodal system of stationary oscillations by simply producing a further vibrational stress which disorganises the system through a positive local production of entropy.

This can, for example, be accomplished by creating a high vacuum in the generation chamber (absolute pressure less than 0.1 millibar) and introducing a jet of gas with positive ΔH of dissociation, for example H₂. Because of the impact with the active surface, the molecules dissociate, and a rapid removal of the lattice's energy occurs, with consequent negative temperature stress. The sudden temperature decrease provokes the disorganisation of the active loci and the shutdown of the nuclear reaction among the hydrogen isotopes.

Alternatively, even leaving the pressure of the gas inside the generation chamber unaltered, it is sufficient to exchange heat cooling the active core up to the point where the temperature of the core itself is brought below Debye's constant. The exchange of heat can, for example, be accomplished by circulating a fluid at a temperature well under Debye's constant in the tube bundle crossing the generation chamber.

In order to provide an even more detailed description of the process according to the present invention, in the following, several practical examples will be set out relative to the application of the above-mentioned steps to a metallic active core whose crystal lattice has adsorbed a certain quantity of natural hydrogen.

### Example 1

On a 90 mm long bar with a diameter of 5 mm, made of a metallic material (Clunil) formed by isometric crystals having Nickel and Chromium atoms in equal number and alternated, natural hydrogen (D/H = 1/6000) was made to adsorb following the introduction of H₂ at a pressure of 500 mbar and temperature of 220°C with contemporaneous immersion in a magnetic field of 1 Tesla obtained by means of coil 9 wound around the core itself. The generator utilised was the one illustrated in figure 1, with tube nest 5 not coated with metallic layer.

The chamber containing the bar was then gradually brought to a temperature of 20° above Debye's constant, which for Clunil is 192°C.

The startup occurred with the thermoelectric method (by a thermic impulse produced by a current impulse passing through winding 9), with the core inserted at all times in the above-mentioned magnetic field and immersed in natural hydrogen at a pressure of 500 millibar. More precisely, the startup was obtained with an impulse intensity of 1000A and a rise time of 30 nanoseconds.

During the course of the reaction, a total net average heat of 1.29 MJ was removed per day, for 58 days, after which the reaction was stopped with a shutdown accomplished by the introduction of H₂, after having temporarily provoked a vacuum (0.1 mbar).

While stopping the reaction, it was observed that during the course of the transient, radioactive isotopes were detected, that it is believed are due to the impact against the neighbouring nuclei of the nuclei of H, D, ³He which are accelerated by the energy of γ photons (5,5 MeV) produced by the last reactions H+D and not given to the lattice for activating further reactions.

### Example 2

On a 200 mm long Nickel bar with a diameter of 3 mm, natural hydrogen (D/H = 1/6000) was made to adsorb with the method of immersion in gaseous environment at the critical temperature of 198°C and contemporaneous application of a magnetic field of 1 Tesla obtained by means of coil 9 wound around the core. The generator used was the one illustrated in figure 2.

The chamber containing the bar was then brought to a temperature of 20° above Debye's constant, which, for Nickel, is 167°C.

The startup occurred with the electric striction method, or, in other words, by applying to the core an electrode through which an impulse of piezoelectric nature was transmitted. More precisely, the startup was obtained with an impulse of at least 10kV and a rise time of 0.1 seconds.

During the reaction, a net total average heat of 4.74 MJ was removed per day, for a period of 31 days, after which, the reaction was stopped with a slow shutdown.

### Example 3

On a 90 mm long bar with a diameter of 5 mm, made of AISI 316 steel which has been tempered at 400°C to eliminate internal stresses, natural hydrogen (D/H = about 1/6000) was made to adsorb with the method of immersion into acid solution and then both immersion in gaseous environment at the absolute pressure of 600 mbar and application of a magnetic field of 1 Tesla obtained by means of coil 9 wound around the core.

The chamber containing the bar was then brought to a temperature above Debye's constant and precisely at 314°C.

The startup was accomplished both with the thermo electric method and by the thermal stress method due to gaseous recombination.

During the reaction, a net total average heat of 2.64 MJ was removed per day, for a period of 34 days, after which the reaction was stopped with a slow shutdown obtained with cooling below the critical temperature.

### Example 4

In a generator like the one illustrated in figure 1, comprising a generation chamber crossed by a tube bundle made of copper, on each tube a layer of 2mm of pure Nickel was electroplated, in which natural hydrogen (D/H = about 1/6000) was made to adsorb with the method of immersion in gaseous environment at the absolute pressure of 600 mbar and contemporaneous application of a magnetic field of 1 Tesla obtained by means of a coil wound around the core and immersed in a ceramic matrix.

The chamber containing the strip of tubes was then brought to a temperature of 210°C, 57° above Debye's constant.

The startup was accomplished with the magnetostrictive method, or, in other words, by applying an electromagnetic impulse to the core through winding 9. More precisely, the startup was obtained with an impulse of 0.8 Tesla and rise time of 0.1 seconds.

During the reaction, by means of thermal carrier fluid crossing the strip of tubes, a net total average heat of 4.9 MJ was exchanged per day, for a period of 6 days, after which, the reaction was stopped with a slow shutdown obtained with cooling below the critical temperature.

The industrial applicability of the generation process and of the generator which actuates said process is, therefore, evident, given that they allow for the production of energy in the form of heat by means of nuclear fusion at relatively low temperatures, without emission of radioactive or otherwise dangerous particles and for long periods. The materials used both for the active core and for the rest of the generator are inexpensive, thus, providing considerable possibilities for economic exploitation.

In cases in which the active core is formed in a material having a higher Debye's constant, such as Silicon (640°K), the temperature at which heat exchange takes place is higher than in the examples described above. Therefore, it is possible to directly exploit the energy acquired by the thermal carrier fluid which crosses the generator, for example to move turbine blades or for similar applications.

The creation of ³He, as a product of the reaction, is, furthermore, also industrially exploitable given the present high cost of this gas.

## Claims

1. Process of energy generation by means of anharmonic stimulated fusion of hydrogen isotopes adsorbed on a crystalline, metallic core characterised in that it comprises:
- a charging step on said metallic core of a quantity of hydrogen isotopes H and D which are adsorbed in the crystal lattice of said core;
- a heating step in which said core charged with hydrogen isotopes is heated to reach a temperature higher than a threshold temperature corresponding to Debye's constant temperature of the material composing said core and lower than a value at which the core metal loses its crystal structure;
- a startup step of said core wherein a vibrational stress is produced with a rise time less than 0.1 seconds which activates a nuclear fusion of said hydrogen isotopes.
- a stationary step during which it is exchanged the heat produced by the H+D nuclear fusion reaction which occurs in the core because of a steady keeping of a coherent multimodal system of stationary oscillations.

2. Process according to claim 1, wherein during said heating step said threshold temperature corresponding to Debye's constant must be exceeded by at least a ΔT comprised between several degrees and several tens of degrees, according to the type of material in which said active core is formed.

3. Process according to claim 1, wherein during said charging step, heating step, startup step and stationary step a magnetic field having an intensity greater than 0.1 Tesla is applied to said core.

4. Process according to claim 1, wherein during said charging step said hydrogen isotopes made to adsorb in said core have a ratio of D isotopes to H isotopes greater than 1/80000.

5. Process according to claim 1, wherein during said charging step said hydrogen isotopes made to adsorb on said core have a ratio of D isotopes to H isotopes comprised between 1/10000 and 1/1000.

6. Process according to claim 1, wherein during said charging step said hydrogen isotopes made to adsorb on said core have a ratio of D isotopes to H isotopes of about 1/6000 (natural hydrogen).

7. Process according to claim 1, wherein at the end of said charging step the crowding of the H and D atoms adsorbed on the metal exceeds a numeric ratio of hydrogen isotopes to metal atoms of 0.3.

8. Process according to claim 1, wherein after said stationary step a shutdown step of the fusion reaction is provided by cooling said core below said threshold temperature.

9. Process according to claim 1, wherein after said stationary step a shutdown step of the fusion reaction is provided by means of production of a further vibrational stress which disorganises said coherent multimodal system of stationary oscillations.

10. Process according to claim 9, wherein said shutdown step comprises the introduction after having temporarily provoked a vacuum of a polyatomic gas into a chamber containing said active core causing said further vibrational stress.

11. Process according to claim 1, wherein said startup step occurs by means of a thermal stress obtained by introducing into a chamber containing said core a polyatomic gas with pressure gradient comprised between 1 millibar and 4 bar.

12. Process according to claims 10 and 11, wherein said polyatomic gas comprises H₂, D₂, HD, HT, C₂H₄, NH₃, N₂, O₂ or a mixture of two or more of them.

13. Process according to claim 1, wherein said startup step occurs by mechanic impulse of torsion, traction or compression applied to the ends of said active core with a rise time less than 10⁻¹ seconds.

14. Process according to claim 1, wherein said startup step occurs by electric striction obtained by means of an electrical current impulse applied to said active core.

15. Process according to claim 1, wherein said startup step occurs by impulses of a laser beam directed on said core.

16. Process according to claim 1, wherein said startup step occurs by impulses of radiofrequency applied to said active core, having a frequency which corresponds to the resonance frequency of the spins of said hydrogen isotopes.

17. Process according to claim 1, wherein said startup step occurs by radiofrequency impulses applied to said active core, having a frequency which corresponds to the plasma frequency of the free electrons of the crystal lattice of said core.

18. Process according to claim 1, wherein said startup step occurs by impulses of ultrasonic vibrations applied to said active core, the latter being contained in a resonant cavity.

19. Process according to claim 1, wherein said startup step occurs by inverse piezoelectric effect by sending to the ends of the metallic core alternate voltage impulses with a frequency equal to that of the mechanic resonance of said core.

20. Process according to claim 1, wherein said startup step occurs by magnetostrictive effect, by means of the production, along said metallic core, of a magnetic field with peak values higher than the intensity of magnetic saturation and a rise time lower than 10⁻¹ seconds.

21. Process according to claim 1, wherein said charging step occurs by electrolytic means.

22. Process according to claim 1, wherein said charging step occurs by means of immersion of said core in a gaseous environment containing hydrogen.

23. Process according to claim 1, wherein said charging step occurs by means of immersion of said core in solutions of HCl, HNO₃, H₂SO₄.

24. Process according to claim 1, wherein said charging step occurs by means of immersion of said core in galvanic baths containing NH₃, the metal constituting the core being deposited on a support composed of Cu or ceramic.

25. Energy generator by means of anharmonic stimulated fusion of hydrogen isotopes adsorbed on metal, for carrying out the process according to any of the previous claims, characterised in that it comprises:
- a crystalline active metallic core (1), on which hydrogen isotopes are adsorbed;
- a generation chamber (2) containing said active core;
- heat exchange means (5) placed inside or around said generating chamber and in which a thermal carrier fluid flows;
- means for creating a vibrational stress (6, 9, 25) on said core with a rise time less than 0.1 seconds;
- means for charging the hydrogen isotopes into the metal core; and
- means for heating the core to a temperature well above the Debye temperature and below a value at which the core metal loses its crystal structure.

26. Generator according to claim 25 wherein said active core has the form of a bar inserted in said generation chamber.

27. Generator according to claim 25 wherein said means for creating a vibrational stress on said core comprises an electric coil (9) immersed in a ceramic matrix and wrapped around a support shell (11) defining said generation chamber.

28. Generator according to claim 27, wherein said generation chamber is crossed by a tube bundle (5) extending between two flanges (10) welded to said support shell, said tube bundle crossing said flanges and communicating with a prechamber (3) comprising an annular jacket (3a) delimited by a cylindrical shell (13) said tube bundle communicating also with a collection dome (4) connected with means for external heat exchange and a circulation pump of a thermal carrier fluid.

29. Generator according to claim 27 or 28 wherein said metallic active core is electroplated on said tube bundle.

30. Generator according to claim 27 to 29 wherein said generation chamber communicates, through axial ducts (6) which cross said dome (4) on one side and said prechamber (3) on the other side, with a gas tank and an air pump suited to feed hydrogen or other gases into said generation chamber creating thermal stress and starting up said reaction.

31. Generator according to claim 25 or 26 wherein said generation chamber (2) is contained in a heating cylinder (20) in which an electric winding (9) is immersed, a jacket (15) around said cylinder being provided formed by a support shell (11) and a cylindrical shell (13) and allowing for the passage of said thermal carrier fluid, said generation chamber through a dome chamber (24) communicating with a gas tank and with an air pump, said core (1) being in contact with an electrode (25) suited to transmit to it an impulse to startup said reaction.

32. Generator according to claim 25 wherein said core is a metal layer electroplated on a Cu or ceramic support.

33. Generator according to claim 25 wherein said core is a metallic powder present in said generation chamber.

34. Generator according to claim 25 wherein said means for creating a vibrational stress on said core comprises a piezoelectric electrode (25) fixed to said core.

## Patentansprüche

1. Verfahren zur Energieerzeugung durch von Oberwellen freie, stimulierte Fusion von Wasserstoffisotopen, die von einem kristallinen Metallkern absorbiert sind, gekennzeichnet durch:
- einen Ladeschritt, während dem eine vorgegebene Menge von Wasserstoffisotopen H und D vom Kristallgitter des Kerns absorbiert werden;
- einen Aufheizschritt, während dem der mit Wasserstoffisotopen geladene Kern auf eine Temperatur gebracht wird, die höher ist als eine Schwellenwerttemperatur entsprechend der Debye's-Konstanttenperatur des den Kern bildenden Materials und niedriger als ein Wert, bei dem das Kernmaterial seine Kristallstruktur verliert;
- einen Startschritt des Kerns, in dem eine Vibrationsbelastung erzeugt wird bei einer Anstiegszeit unter 0,1 Sekunden, um eine Kernfusion der Wasserstoffisotopen zu aktivieren;
- einen Stationärschritt, während dem ein Austausch der wärme stattfindet, die durch die H und D Keinfüsionsreaktion erzeugt worden ist, die im Kern erfolgte aufgrund der Aufrechterhaltung eines höheren multimodalen Systems stationärer Schwingungen.

2. Verfahren nach Anspruch 1, bei dem während des Aufheizschrittes die der Debye's-Konstanten entsprechende Schwellenwerttemperatur um zumindest ΔT zwischen einen Graden und einigen Zehntelgraden erhöht wird, abhängig, von dem Metrial, aus dem der aktive Kern besteht.

3. Verfahren nach Anspruch 1, bei dem während des Ladeschrittes, des Aufheizschrittes, des Startschrittes und des Stationärschrittes auf den Kern ein magnetisches Feld aufgebracht wird, dessen Intensität über 0,1 Tesla liegt.

4. Verfahren nach Anspruch 1, bei dem die während des Ladeschritts zum Eindringen in den Kern veranlaßten Wasserstoffisotope ein Verhältnis D Isotopen zu H Isotopen über 1/80000 haben.

5. Verfahren nach Anspruch 1, bei dem die während des Ladeschritts zum Eindringen in den Kern veranlaßten Wasserstoffisotope ein Verhältnis D Isotope zu H Isotope über 1/80000 haben.

6. Verfahren nach Anspruch 1, bei dem die während des Ladeschrittes zum Eindringen in den Kern veranlaßten Wasserstoffisotope ein Verhältnis D Isotope zu H Isotope von etwa 1/10000 (natürlicher Wasserstoff) haben.

7. Verfahren nach Anspruch 1, bei dem am Ende des Ladeschrittes die Menge der vom Metall absorbierten H und D Atome das numerische Verhältnis von Wasserstoffatomen zu Metallatomen von 0,3 Überschreitet.

8. Verfahren nach Anspruch 1, bei dem dem Stationärschritt ein Abschaltschritt für die Fusionsreaktion folgt, indem der Kern unter die Schwellenwerttemperatur gekühlt wird.

9. Verfahren nach Anspruch 1, bei dem dem Stationärschritt ein Abschaltschritt für die Fusionsreaktion folgt, indem eine weitere Vibrationsspannung aufgebracht wird, um das kohetente multimodale System stationärer Schwingungen aus seiner Ordnung zu bringen.

10. Verfahren nach Anspruch 9, bei dem der Abschaltschritt nach zeitweiliger Ausbildung eines Vakuums die Einführung eines mehratomigen Gases in eine den aktiven Kern aufnehmende Kammer einschließt, um die weitere Vibrationsspannung zu bewirken.

11. Verfahren nach Anspruch 1, bei dem der Startschritt mittels einer thermischen Spannung veranlaßt wird, die durch Einführen eines mehratomigen Gases in eine den Kern aufnehmende Kammer mit einem Druckgradienten zwischen einem Millibar und vier Bar bewirkt wird.

12. Verfahren nach den Ansprüchen 10 und 11, bei dem das mehratomige Gas H₂, D₂, HD, HT, C₂H₄, NH₃, N₂, O₂ oder ein Gemisch aus zwei oder mehreren Angehörigen dieser Gruppe einschließt.

13. Verfahren nach Anspruch 1, bei dem der Startschritt durch mechanische Torsionsimpulse, Zugimpulse oder Druckimpulsebewirkt wird, die auf die Enden des aktiven Kerns mit einer Anstiegszeit von weniger als 10⁻¹ Sekunden aufgebracht werden.

14. Verfahren nach Anspruch 1, bei dem der Startschritt durch elektrische Restriktion bewirkt wird, die mittels eines elektrischen Stromimpulses erhalten und auf den aktiven Kern zur Einwirkung gebracht wird.

15. Verfahren nach Anspruch 1, bei dem der Startschritt mittels eines Laserstrahles bewirkt wird, der auf den Kern gerichtet wird.

16. Verfahren nach Anspruch 1, bei dem der Startschritt durch Impulse einer Radiofrequenz bewirkt wird, die zur Einwirkung auf den aktiven Kern gebracht werden und deren Frequenz der Resonanzfrequenz des Spins der Wasserstoffatome entspricht.

17. Verfahren nach Anspruch 1, bei dem der Startschritt durch Radiofrequenzimpulse bewirkt wird, die zur Einwirkung auf den aktiven Kern gebracht werden und deren Frequenz der Plasmafrequenz der freien Elektronen des Kristallgitters des Kerns entspricht.

18. Verfahren nach Anspruch 1, bei dem der Startschritt durch Ultraschallimpulse bewirkt wird, die zur Einwirkung auf den aktiven Kern gebracht werden, der sich in einer Resonanzkammer befindet.

19. Verfahren nach Anspruch 1, bei dem der Startschritt durch interpiezoelektrische Effekte bewirkt wird, indem den Ende des metallischen Kerns Wechselspannungsimpulse mit einer Frequenz vermittelt werden, die der mechanischen Resonanz des Kerns entspricht.

20. Verfahren nach Anspruch 1, bei dem der Startschritt durch magnetstriktive Effekte bewirkt wird, mittels der Erzeugung eines magnetischen Feldes entlang dem metallischen Kern, wobei die Spitzenwerte des Feldes höher liegen als die Intensität der magnetischen Sättigung und die Anstiegszeit unter 10⁻¹ Sekunden liegt.

21. Verfahren nach Anspruch 1, bei dem der Ladeschritt durch elektrolytische Mittel bewirkt wird.

22. Verfahren nach Anspruch 1, bei dem der Ladeschritt durch Eintauchen des Kerns in ein Umgebungsgas bewirkt wird, das Wasserstoff enthält.

23. Verfahren nach Anspruch 1, bei dem der Ladeschritt durch Eintauchen des Kerns in Lösungen aus HCl, HNO₃, H₂SO₄ bewirkt wird.

24. Verfahren nach Anspruch 1, bei dem der Ladeschritt durch Eintauchen des Kerns in ein galvanisches Bad bewirkt wird, das NH₃ enthält, wobei das den Kern bildende Metall auf Cu oder Keramik abgestützt wird.

25. Generator zur Energieerzeugung mittels unharmonisch stimulierter Fusion von in Metall absorbierten Wasserstoffisotopen zur Durchführung des Verfahrens nach einem der vorstehenden Ansprüche, dadurch gekennzeichnet daß er enthält:
- einen kristallinen aktiven Metallkern (1), der durch Absorption aufgenommene Wasserstoffisotope enthält
- eine Generationskammer (2), in der der aktive Kern sich befindet;
- Wärmetauschermittel (5) in der Anordnung innerhalb der oder um die Generationskammer herum, durch die ein Wärme tragendes Fluid strömt;
- Mittel zur Erzeugung einer Vibrationsspannung (6, 9, 25) in der Zuordnung zu dem Kern mit einer Anstiegszeit von weniger als 0,1 Sekunden;
- Mittel zum Aufladen des Metallkerns mit den Wasserstoffisotopen und Mittel zum Aufheizen des Kerns auf eine Temperatur deutlich über der Debye-Temperatur, aber unter einem Wert, bei dem das Kernmaterial seine Kristallstruktur verliert.

26. Generator nach Anspruch 25, bei dem der aktive Kern die Form eines Barrens hat, der in die Generationskammer eingesetzt ist.

27. Generator nach Anspruch 25, bei dem das Mittel zum Erzeugen einer auf den Kern einwirkenden Vibrationsspannung eine elektrische Wicklung (9) enthält, die in eine keramische Matrix eingebettet ist und um eine Stützschale gewickelt ist, die die Generationskammer bildet.

28. Generator nach Anspruch 27, bei dem die Generationskammer von einem Rohrbündel (5) gekreuzt wird, das sich zwischen zwei an der Stützschale angeschweissten Flanschen (10) erstreckt, wobei das Rohrbündel auch die Flansche kreuzt und mit einer Vorkammer (3) in Verbindung steht, die eine ringförmige Tasche (3a) aufweist, die von einer zylindrischen Schale (13) umschlossen ist, wobei das Rohrbündel auch mit einem Sammeldom (4) in Verbindung steht, der mit Mitteln für einen externen Wärmetausch und einer Umwälzpumpe für ein thermisches Trägerfluid in Verbindung steht.

29. Generator nach Anspruch 27 oder 28, bei dem der metallische aktive Kern auf dem Rohrbündel elektroplattiert ist.

30. Generator nach den Ansprüchen 27 bis 29, bei dem die Generationskammer durch Axialleitungen (6), die den Dom (4) auf der einen Seite und die Vorkammer (3) auf der anderen Seite kreuzen, mit einem Gasbehälter und einer Luftpumpe verbunden ist und Wasserstoff oder ein anderes Gas in die Generationskammer gelangt, um thermische Spannung zu erzeugen und die Reaktion beginnen zu lassen.

31. Generator nach Anspruch 25 oder 26, bei dem die Generationskamner (2) in einem Hetzzylinder (20) enthalten ist, in den die elektrische Wicklung (9) eintaucht, bei dem eine Ummantelung (15) den Heizzylinder umgibt und von einer Stützschale (11) und einer zylindrischen Schale (13) gestützt wird, wobei ein Strömungskanal für das thermische Trägerfluid geschaffen ist, bei dem die Generationskammer durch eine Domkammer (24) mit einem Gasbehälter und einer Luftpumpe verbunden ist, wobei der Kern (1) mit einer Elektrode (25) verbunden ist, um ihm einen Impuls für den Start der Reaktion zu vermitteln.

32. Generator nach Anspruch 25, bei dem der Kern eine Metallschicht aufweist, die auf einen Träger aus Kupfer oder Keramik aufplattiert ist.

33. Generator nach Anspruch 25, bei dem der Kern von einem Metallpulver gebildet wird, das in der Generationskammer enthalten ist.

34. Generator nach Anspruch 25, bei dem das Mittel zur Erzeugung einer Vibrationsbeanspruchung für den Kern eine auf dem Kern befestigte piezoelektrische Elektrode (25) einschließt.

## Revendications

1. Procédé permettant la production d'énergie au moyen de la fusion stimulée non harmonique d'isotopes d'hydrogène adsorbés sur un noyau métallique cristallin, caractérisé par le fait qu'il comprend :
- une étape de chargement sur ledit noyau métallique d'une quantité d'isotopes d'hydrogène H et D qui sont adsorbés dans le réseau cristallin dudit noyau ;
- une étape de chauffage au cours de laquelle ledit noyau chargé avec des isotopes d'hydrogène est chauffé pour atteindre une température supérieure à une température de seuil correspondant à la température de la constante de Debye du matériau composant ledit noyau et inférieure à une valeur à laquelle le métal du noyau perd sa structure cristalline,
- une étape d'excitation dudit noyau au cours de laquelle une contrainte vibratoire est produite avec un temps de montée inférieur à 0,1 seconde, qui active une fusion nucléaire desdits isotopes d'hydrogène,
- une étape stationnaire pendant laquelle est échangée la chaleur produite par la réaction de la fusion nucléaire H+D qui se produit dans le noyau à cause d'un maintien stable d'un système d'oscillations stationnaires multimode cohérent.

2. Procédé selon la revendication 1, dans lequel, pendant ladite phase de chauffage, ladite température de seuil correspondant à la constante de Debye doit être dépassée d'au moins un Dt compris entre plusieurs degrés et plusieurs dizaines de degrés, selon le type de matériau dans lequel ledit noyau actif est réalisé.

3. Procédé selon la revendication 1, dans lequel, pendant lesdites étapes de chargement, de chauffage, d'excitation et stationnaire, un champ magnétique ayant une intensité supérieure à 0,1 Tesla est appliqué audit noyau.

4. Procédé selon la revendication 1, dans lequel, pendant ladite étape de chargement, les isotopes D et H faits pour l'adsorption sur ledit noyau sont dans un rapport supérieur à 1/80000.

5. Procédé selon la revendication 1, dans lequel, pendant ladite étape de chargement, les isotopes D et H faits pour l'adsorption sur ledit noyau sont dans un rapport compris entre 1/10000 et 1/1000.

6. Procédé selon la revendication 1, dans lequel, pendant ladite étape de chargement, les isotopes D et H faits pour l'adsorption sur ledit noyau sont dans un rapport d'environ 1/6000 (hydrogène naturel).

7. Procédé selon la revendication 1, dans lequel, à la fin de ladite étape de chargement, la quantité des atomes H et D adsorbés sur le métal est telle que le rapport numérique entre les isotopes d'hydrogène et les atomes métalliques est supérieur à 0,3.

8. Procédé selon la revendication 1, dans lequel, après ladite étape stationnaire, une étape d'arrêt de la réaction de fusion est réalisée en refroidissant ledit noyau au-dessous de ladite température de seuil.

9. Procédé selon la revendication 1, dans lequel, après ladite étape stationnaire, une étape d'arrêt de la réaction de fusion est réalisée en produisant une contrainte vibratoire additionnelle qui désorganise ledit système d'oscillations stationnaires multimode cohérent.

10. Procédé selon la revendication 9, dans lequel ladite étape d'arrêt comprend l'introduction, dans une chambre contenant ledit noyau, après y avoir temporairement créé un vide, d'un gaz polyatomique provoquant ladite contrainte vibratoire additionnelle.

11. Procédé selon la revendication 1, dans lequel ladite étape de démarrage est produite au moyen d'une contrainte thermique obtenue en introduisant, dans une chambre contenant ledit noyau, un gaz polyatomique sous un gradient de pression compris entre 1 millibar et 4 bars.

12. Procédé selon les revendications 10 et 11, dans lequel le gaz polyatomique est l'un des gaz suivants, H₂, D₂, HD, HT, C₂H₄, NH₃, N₂, O₂ ou un mélange de deux ou plus de ces gaz..

13. Procédé selon la revendication 1, dans lequel ladite étape de démarrage est produite par des impulsions mécaniques de torsion, traction ou compression appliquées aux extrémités dudit noyau actif avec un temps de montée inférieur à 0,1 seconde.

14. Procédé selon la revendication 1, dans lequel ladite étape de démarrage est produite par striction électrique obtenue au moyen d'une impulsion de courant électrique appliquée audit noyau actif.

15. Procédé selon la revendication 1, dans lequel ladite étape de démarrage est produite par des impulsions d'un faisceau laser dirigé sur ledit noyau.

16. Procédé selon la revendication 1, dans lequel ladite étape de démarrage est produite par des impulsions radiofréquences appliquées audit noyau actif, ayant une fréquence qui correspond à la fréquence de résonance des spins desdits isotopes d'hydrogène.

17. Procédé selon la revendication 1, dans lequel ladite étape de démarrage est produite par des impulsions radiofréquences appliquées audit noyau actif, ayant une fréquence qui correspond à la fréquence de plasma des électrons libres du réseau cristallin dudit noyau.

18. Procédé selon la revendication 1, dans lequel ladite étape de démarrage est produite par des impulsions de vibrations ultrasoniques appliquées audit noyau actif, ce dernier étant disposé dans une cavité résonante.

19. Procédé selon la revendication 1, dans lequel ladite étape de démarrage est produite par effet piézo-électrique inverse en envoyant sur les extrémités du noyau métallique des impulsions de tension alternative avec une fréquence égale à celle de la résonance mécanique dudit noyau.

20. Procédé selon la revendication 1, dans lequel ladite étape de démarrage est produite par effet magnétostrictif, par la production, le long dudit noyau métallique, d'un champ magnétique avec des valeurs de crête supérieures à l'intensité de la saturation magnétique et un temps de montée inférieur à 0,1 seconde.

21. Procédé selon la revendication 1, dans lequel ladite étape de chargement est produite par des moyens électrolytiques.

22. Procédé selon la revendication 1, dans lequel ladite étape de chargement est produite au moyen de l'immersion dudit noyau dans un environnement gazeux contenant de l'hydrogène.

23. Procédé selon la revendication 1, dans lequel ladite étape de chargement est produite au moyen de l'immersion dudit noyau dans des solutions de HCl, HNO₃, H₂SO₄.

24. Procédé selon la revendication 1, dans lequel ladite étape de chargement est produite au moyen de l'immersion dudit noyau dans des bains électrolytiques contenant du NH₃, le métal constituant le noyau étant déposé sur un support en Cu ou en céramique.

25. Générateur d'énergie au moyen de la fusion stimulée non harmonique d'isotopes d'hydrogène adsorbés sur un métal, pour mettre en oeuvre le procédé selon l'une quelconque des revendications précédentes, caractérisé en ce qu'il comprend :
- - un noyau métallique actif cristallin (1), sur lequel sont adsorbés des isotopes d'hydrogène,
- - une chambre de production (2) contenant ledit noyau actif,
- - des moyens d'échanges thermiques (5) situés à l'intérieur ou autour de ladite chambre de production et dans lesquels circule un fluide thermique porteur,
- - des moyens pour créer des contraintes vibratoires (6, 9, 25) sur ledit noyau avec un temps de montée inférieur à 0,1 seconde,
- - des moyens pour charger les isotopes d'hydrogène dans le noyau métallique, et
- - des moyens pour chauffer le noyau jusqu'à une température bien supérieure à la température de Debye et inférieure à une valeur à laquelle le noyau métallique perd sa structure cristalline.

26. Générateur selon la revendication 25, dans lequel ledit noyau actif a la forme d'une barre insérée dans ladite chambre de production.

27. Générateur selon la revendication 25, dans lequel lesdits moyens pour créer une contrainte vibratoire sur ledit noyau comprennent une bobine électrique (9) immergée dans une matrice en céramique et enroulée autour d'une coquille support (11) définissant ladite chambre de production.

28. Générateur selon la revendication 27, dans lequel ladite chambre de production est traversée par un ensemble de tubes (5) s'étendant entre deux brides (10) soudées sur ladite coquille support, ledit ensemble de tubes traversant lesdites brides et communiquant avec une préchambre (3) comprenant une chemise annulaire (3a) délimitée par un manchon cylindrique (13), ledit ensemble de tubes communiquant aussi avec un dôme collecteur (4) connecté à des moyens d'échanges thermiques externes et à une pompe de circulation d'un fluide thermique porteur.

29. Générateur selon l'une des revendications 27 et 28, dans lequel ledit noyau métallique actif est déposé par galvanisation sur ledit ensemble de tubes.

30. Générateur selon les revendications 27 à 29, dans lequel ladite chambre de production communique, via des conduits axiaux (6) qui traversent ledit dôme (4) d'un côté et ladite préchambre (3) de l'autre côté, avec un réservoir gazeux et une pompe à air agencés pour alimenter en hydrogène ou autres gaz l'intérieur de la chambre de production en créant des contraintes thermiques et en démarrant ladite réaction.

31. Générateur selon l'une des revendications 25 et 26, dans lequel ladite chambre de production (2) est contenue dans un cylindre de chauffage (20) dans lequel est immergé un enroulement électrique (9), une enveloppe (15) étant disposée autour dudit cylindre de chauffage, ladite enveloppe étant formée d'une coquille support (11) et d'un manchon cylindrique (13) et permettant le passage dudit fluide thermique porteur, ladite chambre de production communiquant, via une chambre dôme (24), avec un réservoir de gaz et une pompe à air, ledit noyau (1) étant au contact d'une électrode (25) apte à lui transmettre une impulsion pour démarrer ladite réaction.

32. Générateur selon la revendication 25, dans lequel ledit noyau est une couche métallique déposée par galvanisation sur un support en Cu ou en céramique.

33. Générateur selon la revendication 25, dans lequel ledit noyau est une poudre métallique située dans la chambre de production.

34. Générateur selon la revendication 25, dans lequel lesdits moyens pour créer une contrainte vibratoire sur ledit noyau comprennent une électrode piézo-électrique (25) fixée sur ledit noyau.
